# EUROPEAN PATENT APPLICATION

(11) **EP 0 887 754 A2**
(43) Date of publication of application: **30.12.1998**
(21) Application number: 98111471.3
(22) Date of filing: 22.06.1998
(51) Int. Cl.: G06F 17/60

(54) **Service management function execution system capable of generating, modifying and deleting service management scenario**

(30) Priority: 23.06.1997 JP 180271/97
(71) Applicant: NEC CORPORATION, Tokyo (JP)
(72) Inventor: Tanaka, Katsuyuki, Minato-ku, Tokyo (JP); Okazaki, Hiroyuki, Minato-ku, Tokyo (JP); Nishi, Koji, Minato-ku, Tokyo (JP)
(74) Representative: Baronetzky, Klaus, Dipl.-Ing.

(57) **Abstract**

In a service management function execution system, a plurality of service function executing sections (6a, 6b, ···) are provided and each of them is defined for one service management function. A scenario data memory (4) stores scenario data describing a sequence of service management functions to be executed. A service scenario execution section (5) requests the service function executing sections to execute the service management functions in, accordance with, the sequence of service management functions stored in the scenario data memory.

## Description

### BACKGROUND OF THE INVENTION

### Field of the Invention

The present invention relates to a service management function execution system for defining a system to be realized for registering and deleting customer information on the customers who utilizes services, maintaining the quality of the service to be utilized by customers and charging the customers for the provided services.

### Description of the Related Art

Generally, service management function execution systems of the type under consideration are used to realize the function of managing the information on the customers who utilize the services and the performance and quality of the services to be provided. Normally, the flow of a service to be provided, i.e., a service management scenario, includes a combination of a variety of service functions and can vary in many different ways according to the specification of the service provider. Therefore, once a service management scenario is determined and an application is configured according to the scenario, the specifications of individual service functions will have to be modified according to the determined scenario, which makes the development operation an enormous workload.

Thus, the service management function execution systems inevitably require a technique that does not involve modifications to the specification of the service management scenario.

A prior art automatic software generation apparatus adapted to modification of a specification is disclosed in JP-A-61-208539. This will be explained later in detail.

With a service management function execution system using the prior art automatic software generating apparatus, the system has to be reconfigured, suspending its operation, each time the service scenario is subjected to a minor modification of the specification such as addition or deletion of a service function.

However, for service management systems, it is not desirable to take the system down once the system starts up the operation of providing services except for system failure, regular servicing or major system updating.

Additionally, the entire service management system has to be reconfigured by modifying the request specification definition document each time a new function is added to or an unnecessary function is deleted from any of the service management functions that are elements for executing the service scenario.

### SUMMARY OF THE INVENTION

It is an object of the present invention to provide a service management function execution system that allows a service scenario to be generated or modified to meet the various demands for services on the part of the customers so that the service scenario can be subjected to additions and modifications while the system is in operation.

Another object of the invention is to easily add or delete an element for executing the service scenario.

According to the present invention, in a service management function execution system, a plurality of service function executing sections are provided and each of them is defined for one service management function. A scenario data memory stores scenario data describing a sequence of service management functions to be executed. A service scenario execution section requests the service function executing sections to execute the service management functions in accordance with the sequence of service management functions stored in the scenario data memory.

### BRIEF DESCRIPTION OF THE DRAWINGS

The present invention will be more clearly understood from the description as set forth below, as compared with the prior art, with reference to the accompanying drawings, wherein:
Fig. 1 is a block circuit diagram illustrating a prior art automatic software generating apparatus;
Fig. 2 is a block circuit diagram illustrating an embodiment of the service management function execution system according to the present invention;
Figs. 3 though 10 are flowcharts showing the operation of the system of Fig. 2;
Fig. 11 is a block circuit diagram of a first example to which the system of Fig. 2 is applied;
Fig. 12 is a table showing the relationship between the service functions and service processings provided in the system of Fig. 11;
Figs. 13 and 14 are diagrams showing the operation of the system of Fig. 11;
Fig. 15 is a block circuit diagram of a second example to which the system of Fig. 2 is applied;
Fig. 16 is a table showing the relationship between the service functions and service processings provided in the system of Fig. 16; and
Fig. 17 is a diagram showing the operation of the system of Fig. 15.

### DESCRIPTION OF THE PREFERRED EMBODIMENT

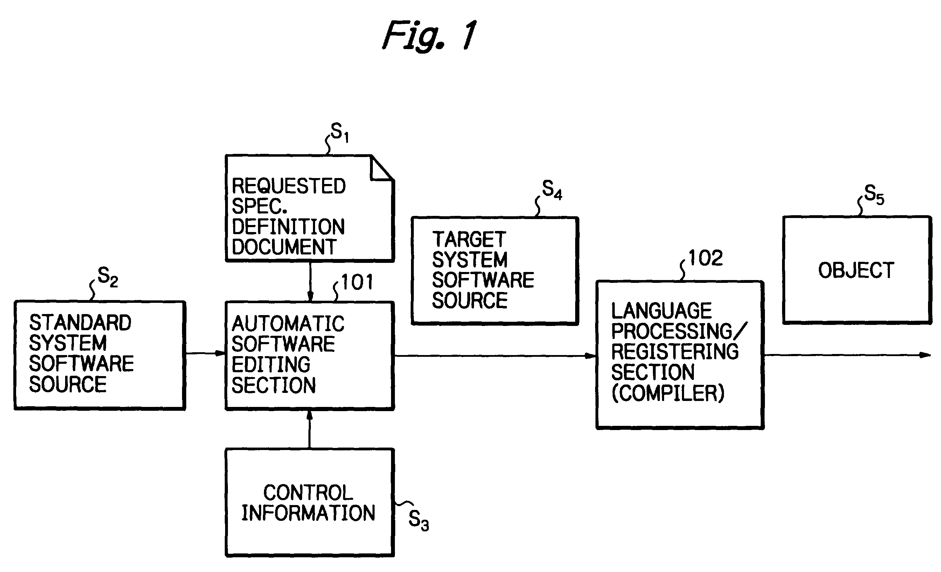

Before the description of the preferred embodiment, a prior art automatic software generating apparatus will be explained with reference to Fig. 1 (see JP-A-61-208539).

In Fig. 1, a request specification document S₁ that describes request items of object system software functions, a standard system software source S₂ that provides a basis for object system software, and control information S₃ that describes information for controlling an object system are prepared in advance. Then, an automatic software editing section 101 carries out an automatic software editing operation in accordance with the requested specification definition document S₁, the standard system software source S₂ and the control information S₃, to thereby generate a target system software source S₄. Then, a language processing/registerin g section (compiler) 102 performs a language processing and registering operation for a real apparatus upon the target system software source S₄, to thereby generate an object S₅.

For modifying the specification, the request specification definition document S₁ and the control information S₃ are reedited to make it possible to regenerate an object S₅. If the automatic software generating apparatus of Fig. 1 is applied to the service scenario executing part of a service management function execution system, it will be understood that a service scenario request specification corresponds to the request specification definition document, and that the source of the existing service function executing part corresponds to the standard system software source and the control information. Therefore, an object software source conforming to the service scenario is generated by the automatic software editing section 101, and an object i.e., the service management function executing part is finally generated by the compiler 102. Thus, if the service scenario is subjected to a modification or addition, an object can be generated once again by simply rewriting the request specification definition document S₁ showing the service scenario.

With a service management function execution system using the automatic software generating apparatus of Fig. 1, the system has to be reconfigured, suspending its operation, each time the service scenario is subjected to a minor modification of the specification such as addition or deletion of a service function. This is because the object system software source S₄ is generated to form a directly built-in service scenario and hence the compiler has to carry out a registering operation once again by modifying the object system software source S₄ itself when the service scenario is modified.

However, for service management systems, it is not desirable to take the system down once the system starts up the operation of providing services except for system failure, regular servicing or major system updating. Minor additions and modifications can occur frequently to the service scenario if the system is to meet various demands on the part of the customers and it will be troublesome to take the system down for each minor addition or modification.

Additionally, with the prior art service management function execution system, all the definitions of individual service management execution functions and the definition of the service scenario for executing the service management scenario by coordinating these definitions have to be written into the request specification definition document for the registration. Consequently, the entire service management system has to be reconfigured by modifying the request specification definition document each time a new function is added to or an unnecessary function is deleted from any of the service management functions that are elements for executing the service scenario.

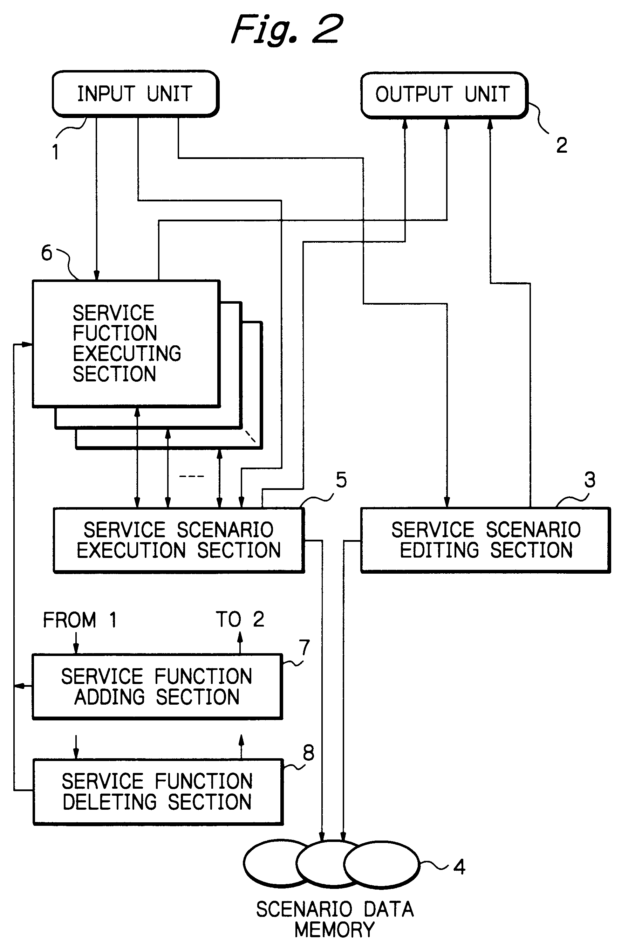

In Fig. 2, which illustrates an embodiment of the service management function execution system according to the present invention, reference 1 designates an input unit such as a keyboard or mouse for receiving input data, and 2 designates an output unit such as a display or a printer. A service scenario editing section 3 has functions of generating, editing and deleting service scenarios which, are stored in a scenario data memory 4. A service scenario execution section 5 executes service functions registered in a service function executing section 6 by referring to the service scenarios in the scenario data memory 4.

In addition, a service function adding section 7 adds a service function to the service function executing section 6, arid a service function deleting section 8 deletes a service function from the service function executing section 6.

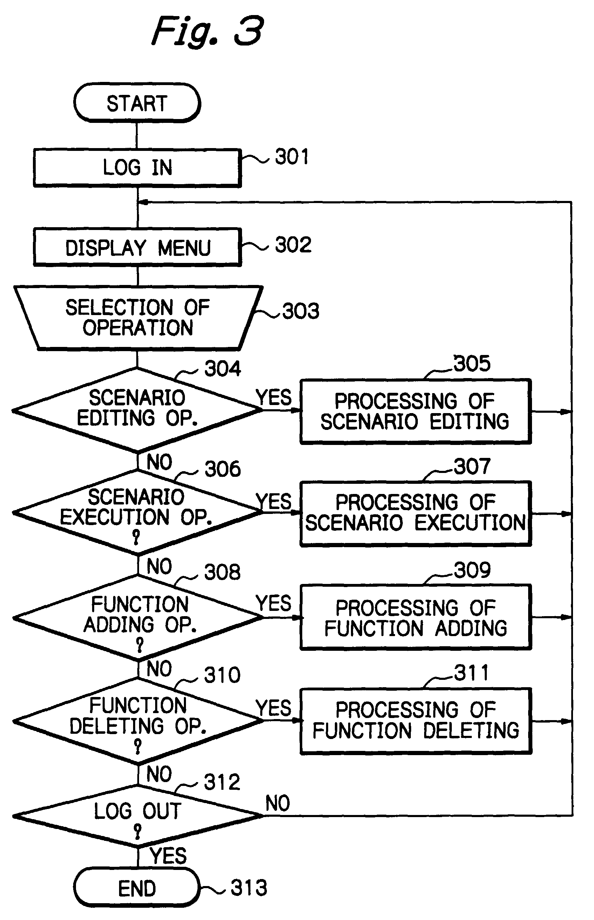

The operation of the service management function execution system of Fig. 2 will be explained next with reference to Figs. 3 through 10.

Fig. 3 is a flowchart showing the operation of the entire system of Fig. 2.

Firstly, at step 301, the service management function execution system is logged into for a processing operation of the system.

Next, at step 302, an operation selection menu is displayed on the screen of the output unit 2. The operation selection menu asks the operator if the service scenario is to be edited or executed according to the scenario data prepared in advance, or if a service function is to be added or deleted.

Next, at step 303, the operator selects one operation from the operation selection menu.

If the scenario editing operation is selected, the control proceeds from step 304 to step 305 which carries out a processing operation for editing the scenario.

If the scenario executing operation is selected, the control proceeds from step 306 to step 307 which carries out a processing operation for actually executing the service scenario.

If the service function adding operation is selected, the control proceeds from step 308 to step 309 which carries out a service function adding operation.

If the service function deleting operation is selected, the control proceeds from step 310 to step 311 which carries out a service function deleting operation.

If none of the above-mentioned operations are selected, the control proceeds to step 312 to log out from the system, thus completing this flowchart at step 313. In this case, unless the system is logged out from, the operation selection menu is displayed on the screen of the output unit 2 by step 302.

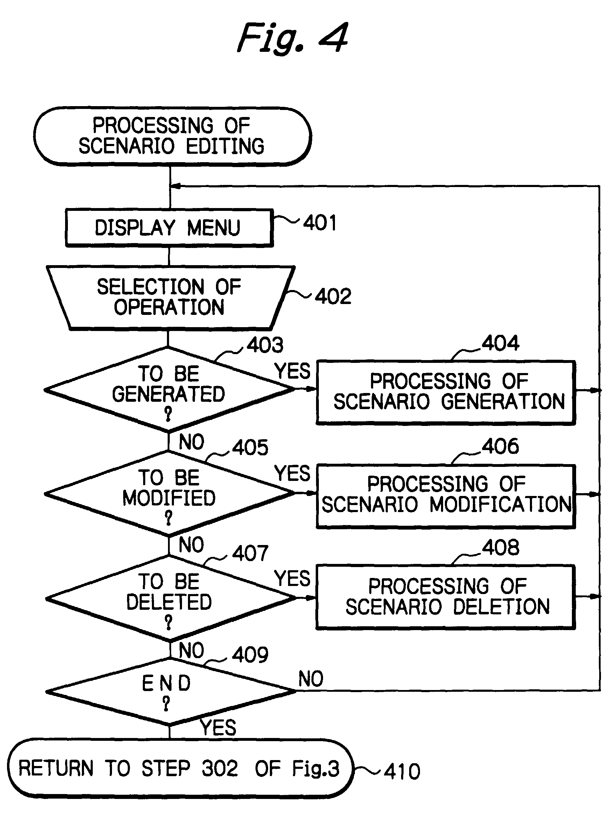

Fig. 4 is a detailed flowchart of the scenario editing operation processing step 305 of Fig. 3 which is carried out by the service scenario editing section 3 of Fig. 2.

Firstly, at step 401, a service scenario editing operation selection menu is displayed on the screen of the output unit 2 for prompting an input operation.

Next, at step 402, the operator selects one operation from the service scenario editing operation selection menu.

If new scenario data is to be generated, control proceeds from step 403 to step 404 which carries out a scenario generating operation.

If the scenario data is to be modified, control proceeds from step 405 to step 406 which carries out a scenario modifying operation.

If the scenario data is to be deleted, control proceeds from step 407 to step 408 which carries out a scenario deleting operation.

When the scenario generating operation, the scenario modifying operation or the scenario deleting operation is completed, the control proceeds to step 409 which asks whether or not the scenario editing operation is to be ended. As a result, if the scenario editing operation is to be carried on, the control returns to step 401. When the end of operation is selected, the control proceeds to step 410, thus returning to step 302 of Fig. 3.

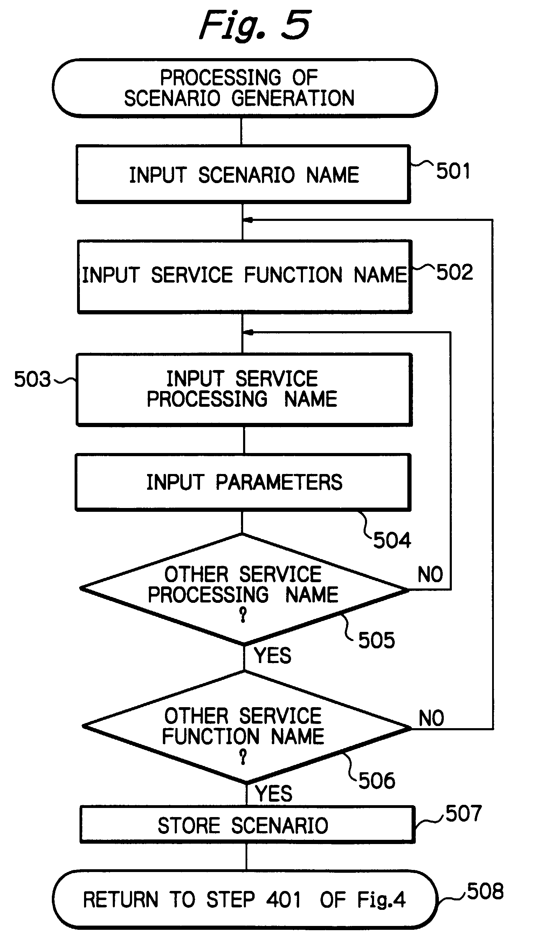

Fig. 5 is a detailed flowchart of the scenario generation processing step 404 of Fig. 4.

Firstly, at step 501, the name of a new scenario to be generated is input.

Next, at step 502, the name of a service function that is a component of the new scenario is input.

Next, at step 503, the name of a service processing carried out by the service function is input.

Next, at step 504, parameters to be used for carrying out the service processing are input.

The input of the names of other service processings will be repeated for a number of times equal to the number of the input service processings by step 505.

The input of the names of other service functions will be repeated for a number of times equal to the number of the input service functions by step 506.

Then, at step 507, the new scenario is stored in the scenario data memory 4.

Thus, the flowchart of Fig. 5 is completed by step 508, returning to step 401 of Fig. 4.

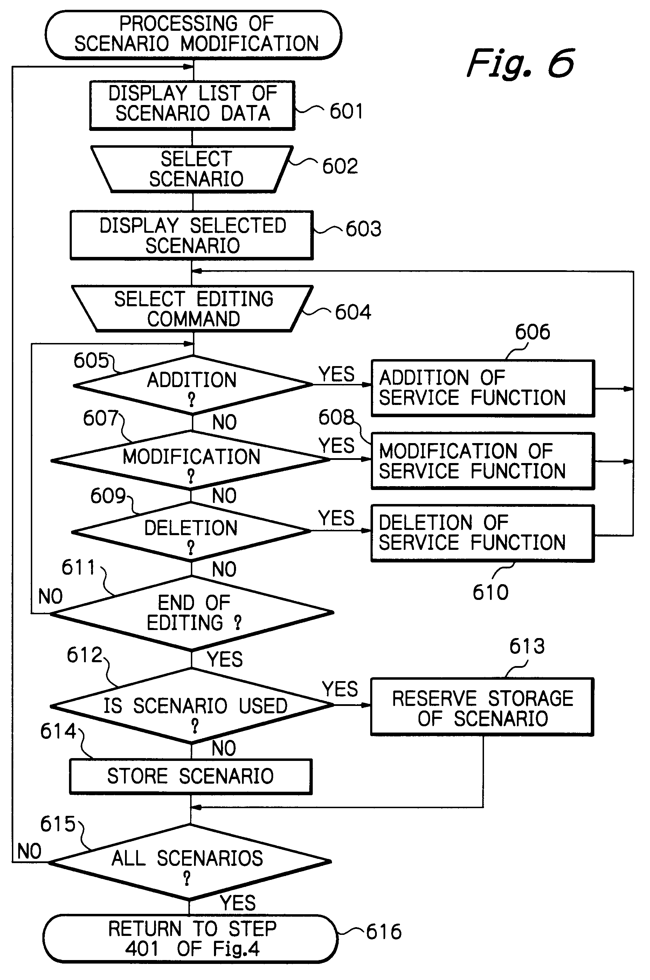

Fig. 6 is a detailed flowchart of the scenario modification step 406 of Fig. 4.

Firstly, at step 601, the list of the existing scenario data stored in the scenario memory 4 is displayed on the screen of the output unit 2.

Next, at step 602, the scenario data to be edited is selected from the list, and at step 603, the selected scenario data is displayed on the screen of the output unit 2.

Next, at step 604, an editing command is selected. Note that the editing commands of the system include one for adding a service function, one for modifying a service function and one for deleting a service function.

If the command for adding a service function is selected, the control proceeds from step 605 to step 606 which adds a service function by entering the name of the new service function and the name of the service processing possessed by that service function.

If, on the other hand, the command for modifying a service function is selected, the control proceeds from step 607 to step 608 which modifies the service function by modifying the name of the service function registered in the scenario memory 4 and the name of the service processing possessed by that service function.

If, finally, the command for deleting a service function is selected, the control proceeds from step 609 to step 610 which deletes a service function by deleting the name of the service function registered in the scenario memory 4 and the name of the service function possessed by that service function.

When the operation of adding, modifying or deleting a service processing function ends, the control returns to step 604 for selecting an editing command. To cancel the editing operation or when the entire editing operation has ended, the control proceeds from step 611 to step 612 which determines whether or not the scenario data that was the target of the editing operation is currently being used. As a result, if it is currently being used, the control proceeds to step 613 which reserves the storage of the scenario data until after the current use is ended. If the edited scenario data is not currently being used, the control proceeds to step 614 which stores the scenario right away.

After storing the scenario or reserving the storage of the scenario data, the control proceeds to step 615 which determines whether or not the operation of editing all the scenario data to be edited is ended. As a result, if the operation of editing scenario data continues, the control returns to step 601 to repeat the above processing operation. Otherwise, the control proceeds to step 616, thus returning to step 401 of Fig. 4.

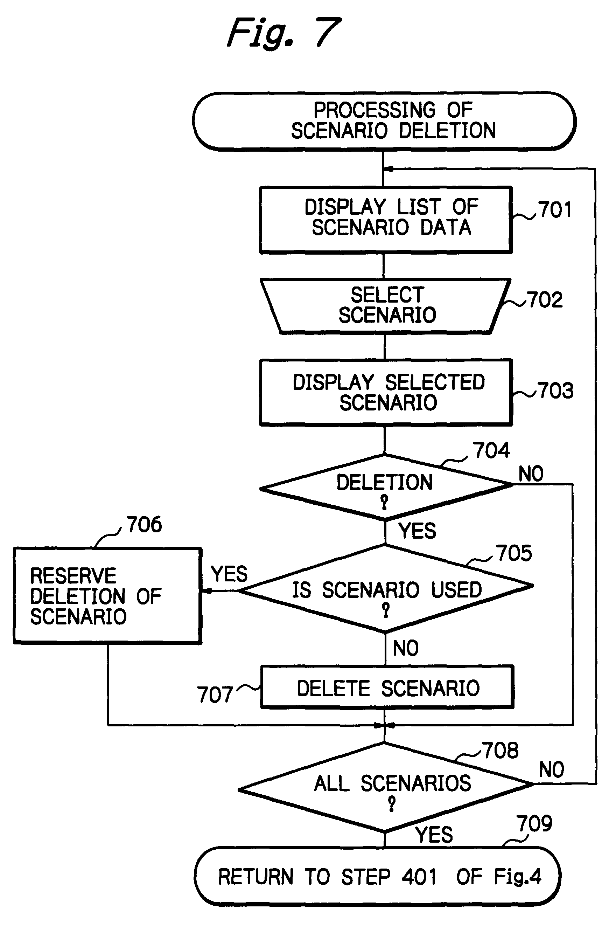

Fig. 7 is a detailed flowchart of the scenario deletion step 407 of Fig. 4.

Firstly, at step 701, the list of the existing scenario data stored in the scenario memory 4 is displayed on the screen of the output unit 2.

Next, at step 702, the scenario data to be deleted is selected from the list, and at step 703, the selected scenario data is displayed on the screen of the output unit 2.

Next, at step 704, it is determined whether or not the selected scenario data is to be deleted. As a result, if it is to be deleted, the control proceeds to step 705 which determines whether or not the scenario data that is to be deleted is currently being used. If it is currently being used, the control proceeds to step 706 which reserves the deletion of the scenario data until after the current use is ended. If the scenario data to be deleted is not currently being used, the control proceeds to step 707 which deletes the scenario data right away.

After deleting the scenario or reserving the deletion of the scenario data, the control proceeds to step 708 which determines whether or not the operation of editing all the scenario data to be deleted is ended. As a result, if the operation of deleting scenario data continues, the control returns to step 701 to repeat the above processing operation. Otherwise, the control proceeds to step 709, thus returning to step 401 of Fig. 4.

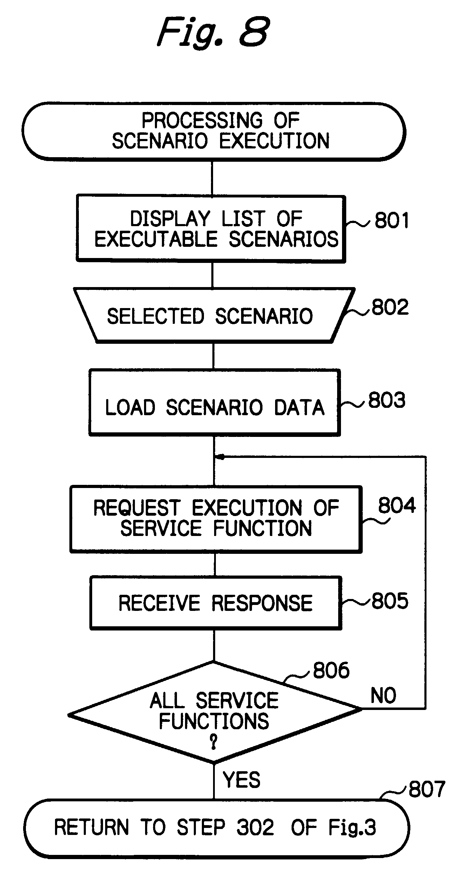

Fig. 8 is a detailed flowchart of the scenario excution step 307 of Fig. 3 which is carried out by the scenario execution section 5 of Fig. 2.

Firstly, at step 801, a list of scenarios that can be executed is displayed on the screen of the output unit 2.

Next, at step 802, the operator selects a scenario for execution.

Next, at step 803, scenario data for the selected scenario is read from the scenario memory 4.

Next, at step 804, the service scenario execution section 5 requests the service function executing section 6 to execute a processing operation for the service to be provided in accordance with the read scenario data. The service function executing section 6 executes the processing operation and returns the result of the execution to the service scenario execution section. As a result at step 805, the scenario exucution section 5 receives a response from the service function executing section 6.

Next, at step 806, the service scenario execution section determines whether or not the operation of executing all the service functions is completed. If the operation is to be continued, the control returns to step 804 to repeat the processing operation. If, on the other hand, the operation is over, the control proceeds to step 807, thus returning to step 302 of Fig. 3.

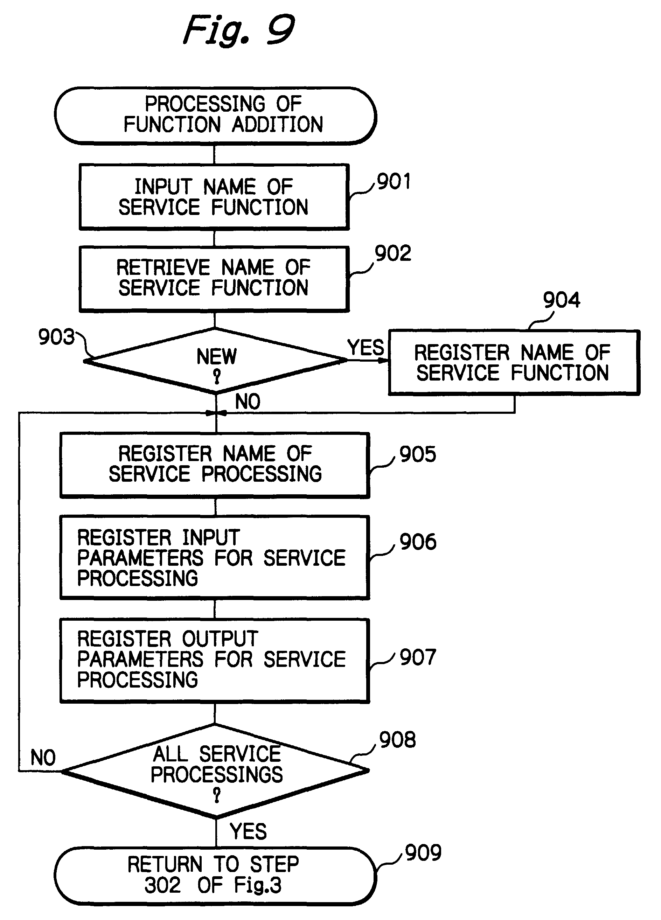

Fig. 9 is a detailed flowchart of the service function adding step 309 of Fig. 3 which is carried out by the service function adding section 7 of Fig. 2.

Firstly, at step 901, the name of a newly prepared service function is input.

Next, at step 902, the service function adding section 7 retrieves the name of the newly prepared service function from the service function executing section 6. That is, it is determined whether or not the name of the newly prepared service function is registered in the service function executing section 6. As a result, if the name of the newly prepared service function is not registered in the service function executing section 6, the control proceeds from step 903 to step 904 which registers the name of the newly prepared service function in the service function executing section 6. On the other hand, if the name of the newly prepared service function is already registered in the service function executing section 6, the control proceeds from step 903 directly to step 905.

At step 905, the name of service processing provided by the service function is registered in the service function executing section 6. Then, at step 906, input parameters necessary for executing the service function are registered, and at step 907, output parameters showing the resulting parameters to be transferred to the service scenario execution section 5 after the execution of the service function are registered.

At step 908, the service function adding section 7 determines whether or not all the service processings are registered. As a result, if there is still a service processing to be registered, the control returns to step 905 to repeat the processing operation. Otherwise, the control proceeds to step 909, thus returning to step 302 of Fig. 3.

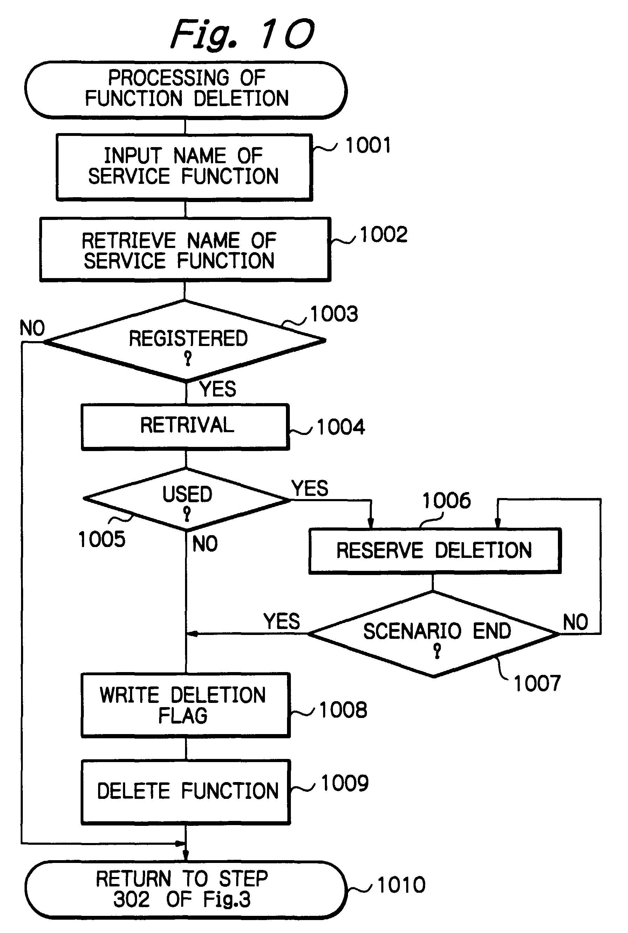

Fig. 10 is a detailed flowchart of the service function deleting step 311 of Fig. 3 which is carried out by the service function deleting section 8 of Fig. 2.

Firstly, at step 1001, the name of the service function to be deleted is input.

Next, at step 1002, the service function deleting section 8 retrieves the name of the service function to be deleted from the service function executing section 6. That is, it is determined whether or not the name of the service function to be deleted is registered in the service function executing section 6. As a result, if the name of the service function to be deleted is registered in the service function executing section 6, the control proceeds from step 1003 to steps 1004 through 1009. On the other hand, if the name of the newly prepared service function is not registered in the service function executing section 6, the control proceeds from step 1003 directly to step 1010.

At step 1004, it is determined whether or not the service function executing section 6 is currently being used, i.e., the service scenario execution section 5 is currently operating. As a result, if it is currently being used, the control proceeds to step 1006 which reserves the deletion of the service function. Then, step 1007 waits for the operation of the service scenario execution section 5 to complete.

Next, at step 1008, when the service scenario is over, or when the use of the service function execution means 104 is over (Yes at 906 in FIG. 9), a flag is written into scenario data of the scenario data memory 4 indicating that the service function is to be deleted, so that the scenario data can no longer be used.

Next, at step 1009, the service function is actually deleted.

The flowchart of Fig. 10 is completed by step 1010, thus returning to step 302 of Fig. 3.

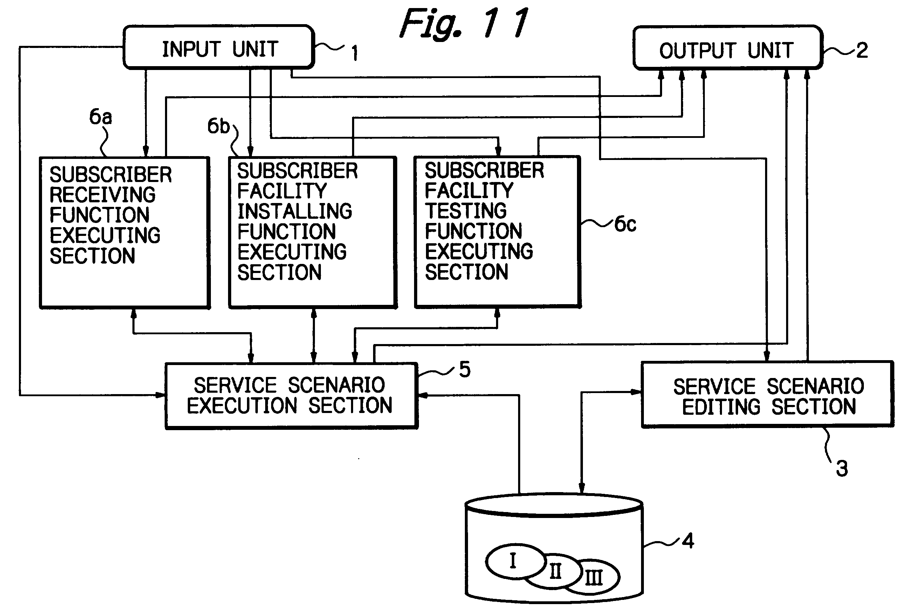

The service management function execution system of Fig. 2 is applied to a service management system as illustrated in Fig. 11 for providing telecommunications services such as telephone services to subscribers.

In Fig. 11, three service function executing sections are provided. That is, a subscriber receiving function executing section 6a, a subscriber facility installing function executing section 6b and a subscriber facility testing function executing section 6c are provided.

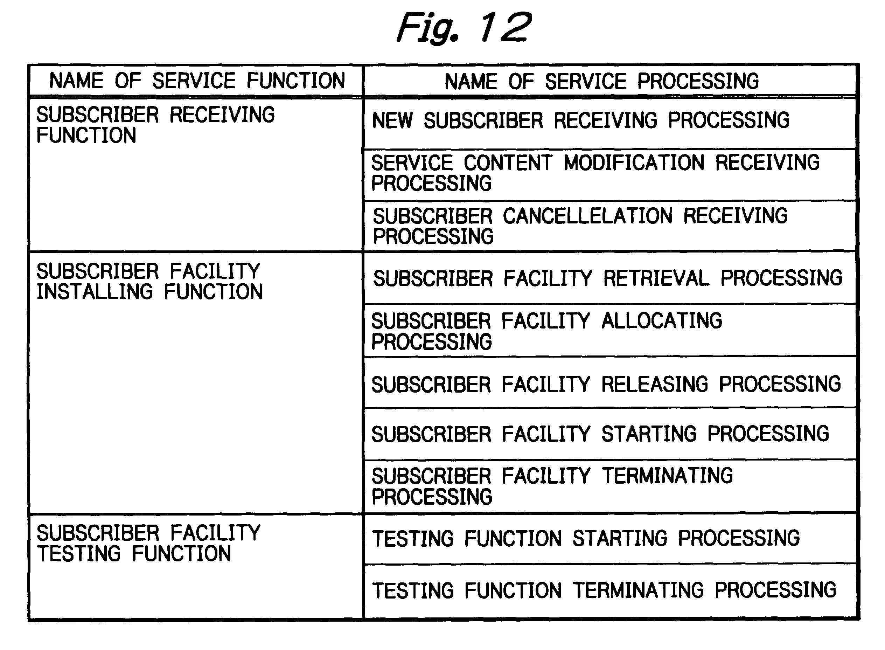

Fig. 12 shows a list of the processings to be provided by the subscriber receiving function, the subscriber facility installing function, and the subscriber facility testing function. The user of the service management system of Fig. 11 prepares a service scenario on the basis of the listed information in Fig. 12.

The scenario as used in Fig. 11 is designed such that, after receiving a customer request to newly utilize the services provided by the system and retrieving the service facilities available to the customer on the basis of the customer information, the facilities are tested to see if they operate normally, and finally are made available to the customer.

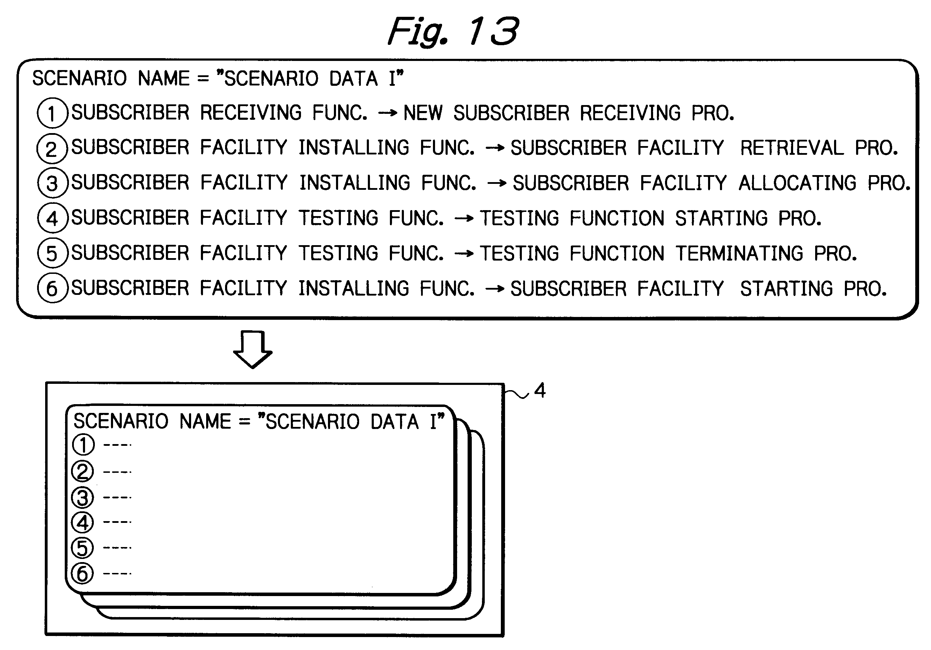

Referring to Fig. 13, firstly, the name of the scenario of "scenario data I" is input into the service scenario editing section 3 by way of the input unit 1 (see step 501 of Fig. 5). Then, the name "subscriber receiving function" is input (see step 502 of Fig. 5), and the name "new subscriber receiving processing" is input before the parameters for the execution of the processing are input (see step 503 and 504 of Fig. 5). Thus, the input processing indicated by ① is completed. The other input processings indicated by ②, ③, ④, ⑤ and ⑥ are carried out by steps 505 and 506 of Fig. 5.

Then, the service scenario editing section 3 stores "scenario data I" in the scenario data memory 4 (see step 506 of Fig. 5).

Then, the user notifies the service scenario execution section 5 by way of the input unit 1 that "scenario data I" is selected from the list of the scenarios that can be executed (see step 802 of Fig. 8) as displayed on the output unit 2 (see step 801 of Fig. 8).

Then, the service scenario execution section 5 loads the specified "scenario data I" from the scenario data memory 4 (see step 803 of Fig. 8).

Then, the service scenario execution section 5 firstly requests the subscriber receiving function executing section 6a to execute the new subscriber receiving processing on the basis of "scenario data I" that has been read in (see step 804 of Fig. 8). As a result, the subscriber receiving function executing section 6a receives information on the new subscriber from the input unit 1 and returns the result of the execution to the service scenario execution section 5 (see step 805 of Fig. 8).

Upon receiving the information on the new subscriber, the service scenario execution section 5 requests the subscriber facility installing function executing section 6b to check whether or not there is a telecommunications facility that is available and can be allocated to the new subscriber (see step 804 of Fig. 8). As a result, the subscriber facility installing function executing section 6b executes the retrieval function and returns the identifier of the telecommunications facility to be allocated to the subscriber to the service scenario execution section 5 for acknowledgement (see step 805 of Fig. 8).

The service scenario execution section 5 requests the subscriber facility installing function executing section 6b to check whether or not there is a telecommunications facility that is available and can be allocated to the new subscriber (see step 804 of Fig. 8). As a result, the subscriber facility installing function executing section 6b executes the retrieval function and returns the identifier of the telecommunications facility to be allocated to the subscriber to the service scenario execution section 5 for acknowledgement (see step 805 of Fig. 8).

The service scenario execution section 5 requests once again the subscriber facility installing function executing section 6b to execute the subscriber allocation function on the basis of the telecommunications facility identifier it received (see step 804 of Fig. 8). As a result, the subscriber facility installing function executing 6b executes the operation of allocating the telecommunications facility having the above identifier to the new subscriber and returns the result of the execution to the service scenario execution section 5 (see step 805 of Fig. 8).

If the allocation to the subscriber succeeded, the service scenario execution section 5 then issues a start request for a test to be conducted on the telecommunications facility to the subscriber facility testing function executing section 6c in order to check whether or not the telecommunications facility operates normally (see step 804 of Fig. 8). As a result, the subscriber facility testing function executing section 6c executes the testing function on the specified telecommunications facility and returns the result of the start of the test to the service scenario execution section 5 (see step 805 of Fig. 8). Whenever there arises a situation where the testing function has to be suspended, the service scenario execution section 5 issues a stop request for the test being conducted on the telecommunications facility to the subscriber facility testing function executing section 6c (see step 804 of Fig. 8). Then, the subscriber facility testing function executing section 6c suspends the testing function on the specified telecommunications facility and returns the result of the stop of the test to the service scenario execution section 5 (see step 805 of Fig. 8).

Finally, the service scenario execution section 5 issues a request for executing the service start function to the subscriber facility installing function executing section 6b in order to make the telecommunications facility available to the subscriber (see step 804 of Fig. 8). As a result, the subscriber facility installing function executing section 6b makes necessary changes to make the telecommunications facility allocated to the subscriber actually available to the subscriber and returns the result of the execution to the service scenario execution section 5 (see step 805 of Fig. 8).

When the service scenario execution section 5 confirms that the entire processing operation is over (see step 806 of Fig. 8), the processing operation comes to an end for the service scenario.

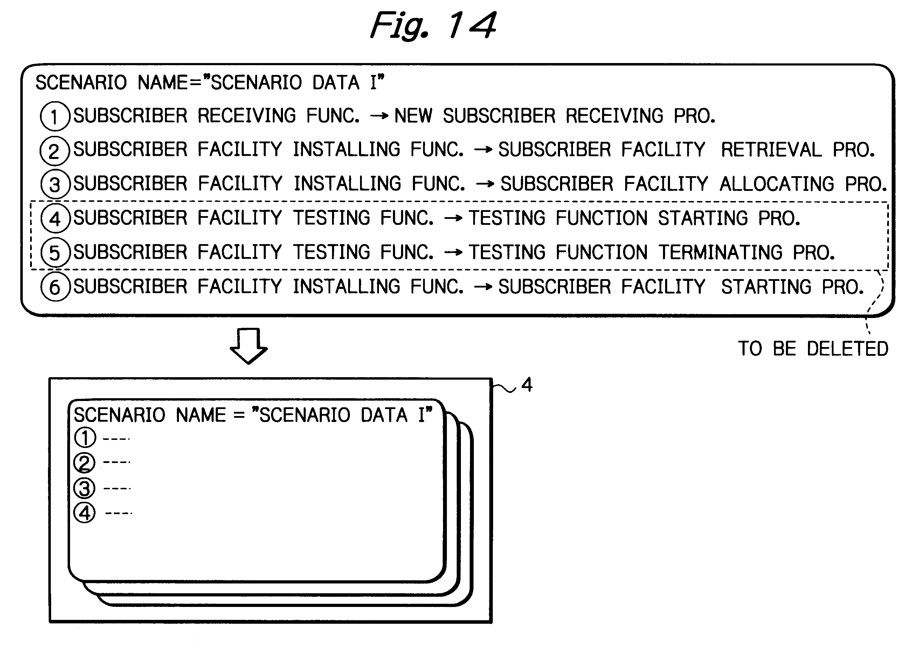

The service management execution system of Fig. 11 requires a simplified reception scenario to receive a new subscriber by editing "scenario data I" and eliminating the testing function from it. This will now be explained by referring to Fig. 14.

In Fig. 14, when a processing operation for editing the scenario is started, a list of existing scenario data is displayed on the output unit 2 (see step 601 of Fig. 6) and the name of the scenario to be edited is input to the service scenario editing section 3 by way of the input unit 1 (see step 602 of Fig. 6).

Additionally, "deletion" is selected as an editing command (see step 604 of Fig. 6), and the name of the subscriber facility testing function executing section 6c that is to be deleted from the scenario and the name of the testing function starting proceeding are input (see step 610 of Fig. 6 and steps 502 and 503 of Fig. 5).

Subsequently, the deletion command is selected again (see step 604 of Fig. 6) and the name of the subscriber facility testing function executing section 6c and the name of the testing function terminating proceeding are input (see step 610 of Fig. 6 and steps 502 and 503 of Fig. 5).

When the entire editing operation is over (see step 611 of Fig. 6), the service scenario editing section 3 checks whether or not "scenario data I" is currently being used (see step 612 of Fig. 6). As a result, if it is currently being used, the storage of the edited "scenario data I" is reserved until after the end of the processing operation of executing the scenario (see step 613 of Fig. 6). If "scenario data I" is not currently being used, it is stored in the scenario data memory 4 (see step 614 of Fig. 6) to complete the editing operation.

For performing a processing operation of executing a service on the basis of the edited "scenario data I" the fact that "scenario data I" is selected from the list of executable scenarios displayed on the output unit 2 (see step 801 of Fig. 8) is notified to the service scenario execution section 5 by way of the input unit 1 (see step 802 of Fig. 8). The service scenario execution section 5 then reads "scenario data I" from the scenario memory 4 and causes the subscriber facility installing function executing section 6b to allocate a telecommunications facility to the new subscriber and then execute the subscriber facility starting processing without executing the testing function.

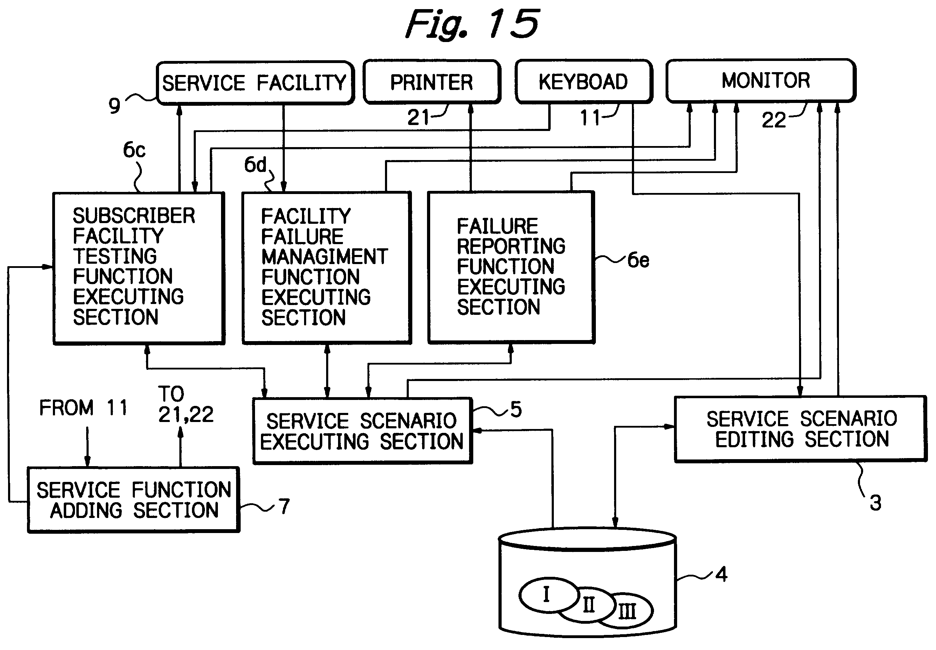

The service management function execution system of Fig. 2 is applied to a service management as illustrated in Fig. 15, where a service scenario is executed when a failure mending service is newly introduced for service facilities. While a processing operation is started upon receiving a request from the customer in Fig. 11, Fig. 15 is used for a situation where the service facility being used by the customer fails for some reason or another and the operator, upon receiving a notification on the failure, identifies the cause of the trouble and sends a failure report to the repair personnel.

In Fig. 15, a keyboard 11 for entering the operator's instructions as the input unit 1 of Fig. 2 is provided, and a monitor 21 for displaying a failure report and a printer 22 for recording the outcome of the processing operation on a sheet of paper as the output unit 2 of Fig. 2 are also provided. Additionally, a service facility 9 is provided. Furthermore, a facility failure management executing section 6d and a failure reporting function executing section 6e are provided. The facility failure management function executing section 6d identifies a failure upon receiving the notification of a failure from the service facility 9. The failure reporting function executing section 6e prepares a failure report and sends it to the repair personnel.

The service function adding section 7 is provided in order to register new service functions.

Note that the subscriber receiving function executing section 6a and the subscriber facility installing function executing section 6b of Fig. 11 are not provided in Fig. 15.

The operation of the service adding function adding section 7 of Fig. 15 for adding the facility failure management function and the failure reporting function will now be explained.

Firstly, the name of the facility failure management function is input (see step 901 of Fig. 9). Then, it is checked whether or not the facility failure management function has already been registered (see steps 902 and 903 of Fig. 9). Since it is newly registered, the facility failure management function is registered in the facility failure management function registering and executing section 6d (see step 904 of Fig. 9).

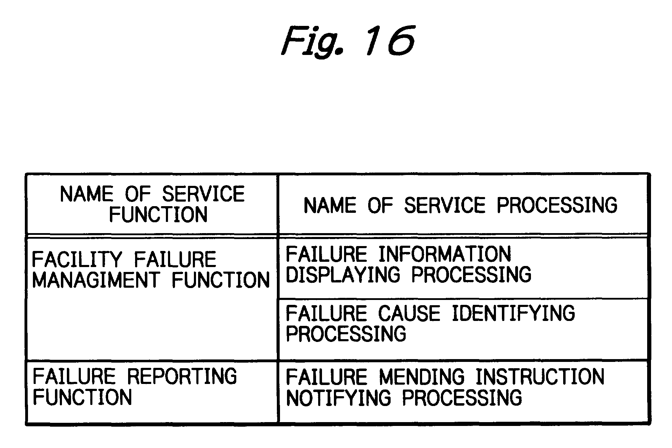

Next, the control proceeds to a processing operation of registering the service processing names possessed by the facility failure management function. That is, as shown in Fig. 16, the name of the failure information displaying processing is registered to display information on the failure currently taking place in the service facility 9 on the monitor 22 (see step 905 of Fig. 9). Then, input parameters such as the identification number of the service facility 9 that need to be displayed as they are received for executing the failure information displaying function are registered (see step 906 of Fig. 9), and then output parameters for returning the failure information displaying function including the data to be displayed and the outcome of the execution to the service scenario execution section 5 are registered (see step 907 of Fig. 9). Since the facility failure management function executing section 6d also has the function of identifying the cause of the failure, the control returns to step 905 of Fig. 9. As in the case of the failure information displaying function, the name of the failure cause identifying function is registered. Subsequently, input parameters including the data on the test by the subscriber facility testing function executing section 6c are registered (see step 906 of Fig. 9), and also output parameters including the identified cause of failure are registered (see step 907 of Fig. 9), to complete the registering operation of the facility failure management function executing section 6d.

The above description can be applied to the operation of the failure reporting function executing section 6e if it is added.

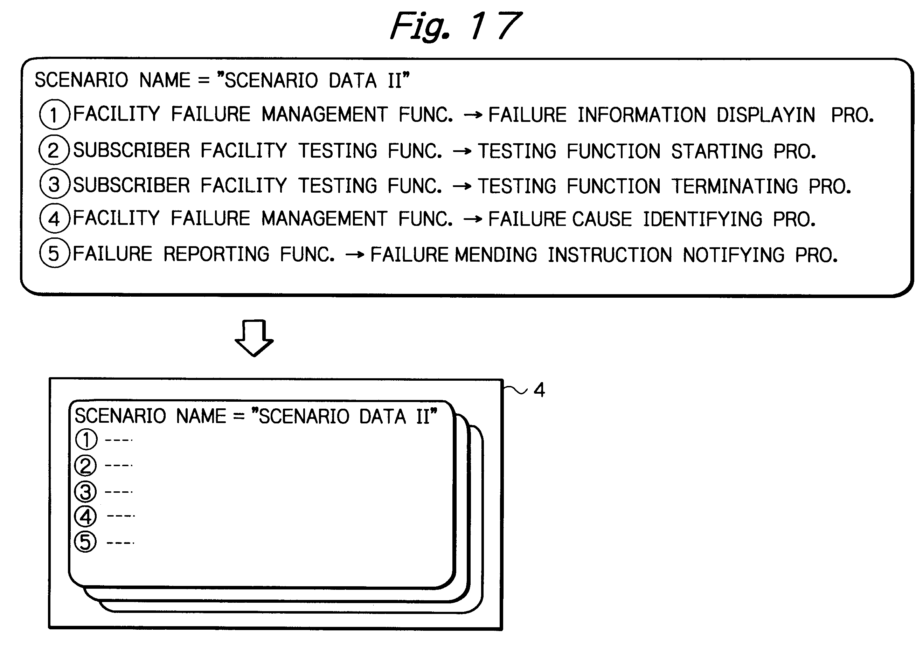

Next, the processing operation for adding a service scenario and the operation of executing the service processing according to an edited scenario in Fig. 15 will now be explained with reference to Fig. 17.

Referring to Fig. 17, the name of the scenario of the "scenario data 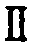 " is input to the service scenario editing section 3 by way of the keyboard 11 (see step 501 of Fig. 5), and then the name of the facility failure management function and the name of and the failure information displaying processing are input (see steps 502, 503 and 504 of Fig. 5). Subsequently, steps 502 through 506 are repeated until the name of the failure reporting function and the name of the failure mending instruction notifying processing are input. Thus, the input sequence from ① through ⑤ in Fig. 17 is carried out. The service scenario editing section 3 stores "scenario data 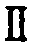 " in the scenario data memory 4 (see step 507 of Fig. 5).

The operation of executing the service scenario according to "scenario data 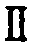 " will now be explained.

Upon receiving a notification that the service facility 9 is in failure, the customer notifies the service scenario execution section 5 that "scenario data 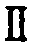 " describing the scenario for notifying the failure mending instruction is selected from the executable scenarios listed on the monitor 22 (see step 801 of Fig. 8) by way of the keyboard 11 (see step 802 of Fig. 8).

The service scenario execution section 5 loads the specified "scenario data 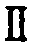 " from the scenario data memory 4 (see step 803 of Fig. 8). The service scenario execution section 5 firstly requests the facility failure management function executing section 6d to display the current status of the failure on the basis of "scenario data 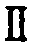 " that has been read in (see step 804 of Fig. 8). Then, the operator confirms that information on the current status of the failure is displayed on the monitor 22 by the facility failure management function executing section 6d. Then, the service scenario execution section 5 requests the subscriber facility testing function executing section 6c to test the service facility 9 in failure (see step 804 of Fig. 8). The subscriber facility testing function executing section 6c receives the parameters for executing the testing function from the keyboard 11 and executes a receiving test (see step 805 of Fig. 8) before it returns the result of the execution to the service scenario execution section 5 (see step 806 of Fig. 8).

Next, the service scenario execution section 5 requests the subscriber facility testing function executing section 6c to stop the test (see steps 805 and 806 of Fig. 8), and subsequently requests the facility failure management function executing section 6d to execute the failure cause identifying function by giving it the test result (see step 804 of Fig. 8). The facility failure management function executing section 6d then identifies the failure cause from the current status of the test result and the failure information, and retrieves a repair means before it returns the result of the execution to the service scenario execution section 5 (see step 805 of Fig. 8).

The service scenario execution section 5 passes the cause of failure and the information on the mending means it received to the failure reporting function executing section 6e to request the latter for the execution of the failure mending instruction notifying processing (see step 804 of Fig. 8). The failure reporting function executing section 6e displays the point of failure, the identified failure cause and the information on the mending means on the monitor 22 for the repair personnel and records them in a printed form by means of the printer 21. Then, the failure reporting function executing section 6e returns the result of the processing operation to the service scenario execution section 5 (see step 805 of Fig. 8). The service scenario execution section 5 confirms that the entire processing operation is over (see step 806 of Fig. 8), the processing operation comes to an end for the service scenario.

As explained hereinabove, in a service management function execution system according to the present invention, since the system for executing a scenario is completely separated from scenario data per se, and the system for executing the scenario is designed to read the scenario data for processing operations, the scenario can be modified for the addition or deletion of a minor service function while the system is in operation. Therefore, the system can operate stably without the need of suspending the system and changing the scenario if the scenario has to be modified to an insignificant extent.

Additionally, since service function executing sections for realizing service management functions can be prepared and registered independent of the service scenario execution section, the service function executing sections can be added to the scenario by means of a scenario editing operation to provide a component to be used for executing the scenario. Conversely, the scenario can be updated by erasing the service function executing sections and editing the scenario to delete the service function execution section. Therefore, the operation of adding or deleting a service management function that may become necessary as a result of introducing a new service, can be carried out without entirely reconfiguring the existing system.

## Claims

1. A service management function execution system comprising:
a plurality of service function executing means (6a, 6b, ···) each defined for one of service management functions;
a scenario data memory (4) for storing scenario data describing a sequence of service management functions to be executed; and
a service scenario execution means (5) for requesting said service function executing means to execute the service management functions in accordance with the sequence of service management functions stored in said scenario data memory.

2. The system as set forth in claim 1, further comprising a service scenario editing means (3) for preparing new scenario data in said scenario data memory, modifying said scenario data in said scenario data memory, and deleting said scenario data in said scenario data memory.

3. The system as set forth in claim 1, further comprising a service function adding means (7) for adding a new service executing means.

4. The system as set forth in claim 1, further comprising a service function deleting means (8) for deleting some of said service executing means.

5. The system as set forth in claim 1, further comprising an input means (1) for inputting parameters to said service scenario execution means.

6. The system as set forth in claim 1, further comprising an output means (2) for displaying an execution result of said service scenario execution means and an execution result of said service function executing means.

7. The system as set forth in claim 1, wherein at least one of said service function executing means carries out a function of allocating a service facility (9).

8. The system as set forth in claim 1, wherein at least one of said service function executing means carries out a function of testing a service facility (9).

9. The system as set forth, in claim 1, wherein at least one of said service function executing means carries out a function of managing a failure state of a service facility (9).
